(19)

Europäisches
Patentamt
European
Patent Office
Office européen
des brevets

(11) **EP 4 776 614 A1**

(12) **EUROPEAN PATENT APPLICATION**

(43) Date of publication:
**15.07.2026 Bulletin 2026/29**

(21) Application number: **25305040.5**

(22) Date of filing: **14.01.2025**

(51) International Patent Classification (IPC):
*H04N 19/124* (2014.01)    *G06T 9/00* (2006.01)
*G06T 13/20* (2011.01)    *H04N 19/17* (2014.01)
*H04N 19/172* (2014.01)    *H04N 19/20* (2014.01)
*H04N 19/70* (2014.01)    *H04N 21/81* (2011.01)
*H04N 21/854* (2011.01)

(52) Cooperative Patent Classification (CPC):
H04N 19/124; G06T 9/001; H04N 19/17;
H04N 19/172; H04N 19/20; H04N 19/70;
H04N 21/8146; H04N 21/816; H04N 21/85406

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **COVA REGATEIRO, João Pedro**
**35220 CHATEAUBOURG (FR)**

• **GOSSELIN, Philippe Henri**
**35235 THORIGNE-FOUILLARD (FR)**
• **HAMZA, Ahmed**
**COQUITLAM, V3J 3X5 (CA)**
• **AVRIL, Quentin**
**35830 BETTON (FR)**
• **LE CLERC, Francois**
**35590 L'HERMITAGE (FR)**

(74) Representative: **Interdigital**
**Immeuble ZEN 2**
**845 A, avenue des Champs Blancs**
**35510 Cesson-Sévigné (FR)**

(54) **ANIMATION BITSTREAM FORMAT AND COMPRESSION FOR AVATAR REPRESENTATION FORMAT**

(57)    An encoding method is disclosed. An avatar animation unit (AAU) is obtained that comprises a header and a payload. From the header, it is determined whether the AAU is a keyframe AAU or a non-keyframe AAU. The AAU is finally encoded responsive to the determining.

**FIG. 4**

EP 4 776 614 A1

## Description

### BACKGROUND

The present application is related to the encoding and decoding of avatar animation data.

### BRIEF SUMMARY

Briefly stated, in one embodiment, an encoding method is disclosed. An avatar animation unit (AAU) is obtained that comprises a header and a payload. From the header, it is determined whether the AAU is a keyframe AAU or a non-keyframe AAU. The AAU is finally encoded responsive to the determining. An encoding apparatus is also disclosed.

A decoding method is also disclosed. A header and a payload of an avatar animation unit (AAU) are decoded. It is determined from the header whether the AAU is a keyframe AAU or a non-keyframe AAU. The AAU is finally reconstructed responsive to the determining. A decoding apparatus is also disclosed.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 illustrates a binary structure using keyframe and non-keyframe AAUs according to one or more embodiments of the present disclosure;

FIG. 2 is a block diagram illustrating an example of a method for decoding avatar parameters according to one or more embodiments of the present disclosure;

FIG. 3 is a block diagram illustrating an example of a method for encoding avatar parameters according to one or more embodiments of the present disclosure;

FIG. 4 is a block diagram illustrating an example of an encoding method of an avatar animation unit using quantization and compression according to one or more embodiments of the present disclosure;

FIG. 5 is a block diagram illustrating an example of a decoding method of an avatar animation unit using quantization and compression according to one or more embodiments of the present disclosure;

FIG. 6 shows an example architecture of a device which may be configured to implement methods according to one or more embodiments of the present disclosure; and

FIG. 7 shows an example of an embodiment of the syntax of a stream when the data are transmitted over a packet-based transmission protocol according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

The current effort in MPEG for the streaming of avatar animation is limited to animation of volumetric meshes. Volumetric meshes are animated by pre-computing correspondences to a template (shadow mesh) for every single frame of the volumetric sequence. A shadow mesh is a mesh that contains a lower fidelity than the volumetric mesh. The correspondences between the two are performed in such a way that each vertex of the volumetric mesh maps to a polygon of the shadow mesh. The objective of the shadow mesh is to provide additional semantical information to the volumetric mesh, e.g., skeletal structure and lower polygon mesh representation, permitting the transferring of animations of the shadow mesh onto the dependent volumetric mesh.

The correspondences between the volumetric mesh and the shadow mesh are performed in such a way that each vertex of the volumetric mesh maps to a polygon of the shadow mesh. At the application side, the volumetric mesh follows the motion of the shadow mesh as a result of the mapping between the two meshes. This behavior is achieved by defining a correspondence schema. For example, in a glTF file, the correspondence schema may be defined according to the syntax in Table 1.

Table 1 - Definition of MPEG_mesh_linking extension

| Name | Type | Description |
|---|---|---|
| correspondence | integer | Provides a reference to the accessor where correspondence information is stored. |
| mesh | integer | Provides a reference to the shadow mesh |
| pose | integer | Provides a reference to the accessor where the transformation information is stored. |
| weights | integer | Provides a reference to the accessor where the animation weights are stored. |

"MPEG_mesh_linking" extension is dependent on circular buffers ("MPEG_buffer_circular") and timed accessors ("MPEG_accessor_timed") to produce timed animations that are dependent on the shadow mesh. The parameters defined in Table 1 have to be transmitted to the decoder. The parameter "Correspondence" provides a reference to the accessor that describes the buffer where the correspondence between a dependent mesh and a shadow mesh is established. The parameter "Mesh" provides a reference to a mesh in the list of meshes that are referred to as "shadow mesh" and to which the correspondences are established. The parameter "Pose" provides a reference to the accessor that describes the buffer, that contains the transformation matrices of all the nodes of the dependent mesh to be re-animated. The parameter "Weights" provides a reference to the accessor that describes the buffer where the morph targets weights of the shadow mesh associated with the dependent mesh is available.

Animating avatar representations and streaming the animation parameters over a network, either for re-enactment or for driving other avatar representations that are supported on other platforms is not straightforward. Current solutions, for example in MPEG, lack the flexibility for such modality and only focuses on a very niche use case of dynamic mesh sequences.

Avatar representation arrived with rich properties, able to provide realistic renderings, simplistic animations and easy parametrizations that allow users to personalize and animate their characters freely. The properties that are concerned to this invention are animation parameters, such as skeletal joints animations, blendshapes, keypoints, and more sophisticated controller mechanisms. The increased demand for video teleconferencing solutions requires efficient solutions for streaming of a diverse range of technologies, and MPEG has yet to provide an efficient solution for the problem for the streaming of avatar animation parameters.

According to the present principles, a solution is provided to map two different avatar representations and to drive the animation of a target avatar over the network based on the animation of a source avatar using a streaming protocol. More precisely, a mechanism for structuring avatar animation information generated by a capturing device in a bitstream format that can be used to store, load, and stream this information to a receiver to animate a corresponding digital representation loaded by the receiver. In another example, a solution is provided to stream correspondence between avatar properties, animation data related to an avatar representation format and quantize and compress the data, this solution allows mapping different avatars representations including their shape, semantics, articulation and animation parameters (e.g., morph targets, blendshapes, landmarks).

An avatar animation bitstream is composed of a sequence of avatar animation units (AAUs), which may also be referred to as NAL units. The general syntax structure for an AAU is shown in Table 1, where the data types used for the definition of different fields in the syntax structures are as follows: uimsbf: unsigned integer with most significant bit first, vlc8: variable length character string that contains string data stored as a character array encoded in UTF-8, boolean: a single bit that represents a Boolean value, float32: a 32-bit floating point value represented according to the IEEE 754 specification.

Each avatar animation unit (AAU) contains a header and a payload. An AAU header contains at least a field that indicates the unit type and a field that indicates the AAU payload. The contents of the payload depend on the type of the AAU, where ByteAlignment is a padding with up to seven bits set to 0 for the AAU payload to be byte-aligned.

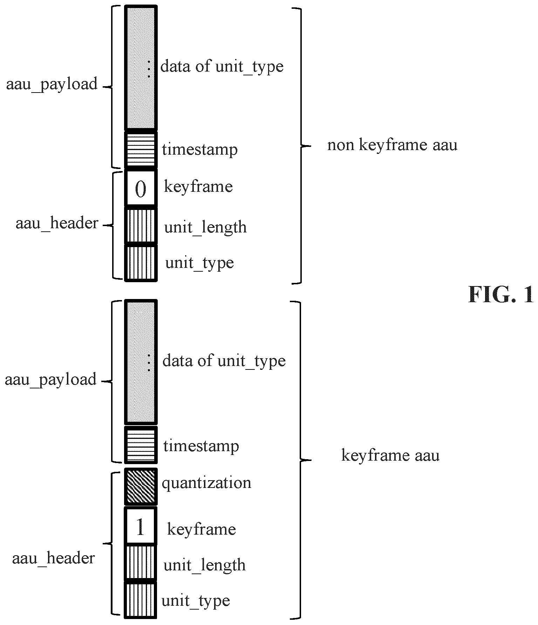

FIG. 1 illustrates a binary structure using keyframe and non-keyframe AAUs. A keyframe AAU represents the main structure of the bitstream format including detailed information about the frame being transmitted, e.g., quantization of the data of unit_type different from configuration type (AAU_CONFIG), and other properties of the payload defined in this document. A non-keyframe contains the same properties of the payload as for the keyframe with the exception that the data being transmitted is coded (reconstructed respectively) relative to a previous keyframe AAU. To this end, the data of a non-keyframe is a difference between a current frame and a last keyframe, using the aau_quantization as a precision parameter to encoded (reconstruct respectively) the current frame.

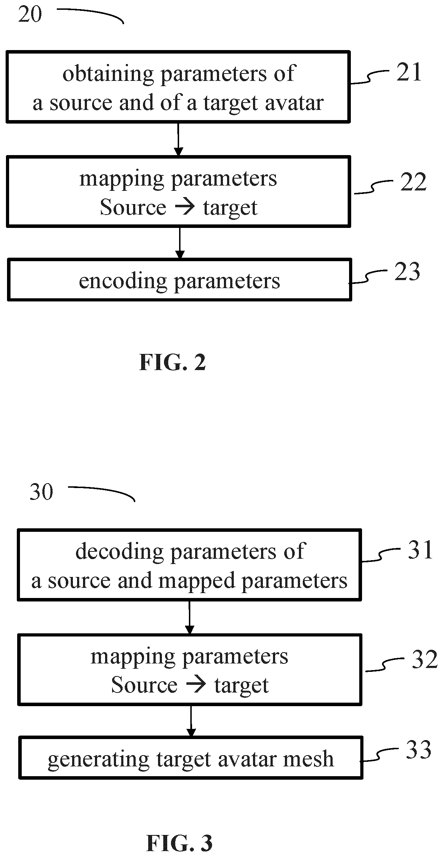

FIG. 2 illustrates a method 20 for encoding avatar parameters according to the present principles. At step 21, parameters of a source avatar parameters and parameters of a target avatar are obtained from at least a source. At step 22, the parameters of the source avatar are mapped to the parameters of the target avatar. At step 23, the mapped parameters and the source avatar parameters are encoded in a data stream.

**FIG. 3** illustrates a method 30 for decoding avatar parameters according to the present principles. At step 31, parameters of a source avatar and mapped parameters are decoded from a data stream, e.g., the one generated by the encoding method of FIG. 2. At step 32, the mapping (e.g., mapped parameters) obtained in a previous packet are used to compute the target avatar parameters (e.g., weights) given the source avatar parameters (e.g., weights). At step 33, a target avatar mesh is generated and may be rendered.

The general syntax structure for an AAU is shown the following tables. Each animation unit contains a header and a payload. An AAU header contains at least a field that indicates the unit type. The contents of the payload depend on the type of the unit.

In one embodiment, the framing of the units may be done by signaling the unit (or the unit's payload) length/size in bytes in the AAU header. In another embodiment, the framing of the AAU is done externally through a separate framing mechanism.

| Syntax | No. of bits | Mnemonic |
|---|---|---|
| avatar_animation_unit()<br>{<br>    aau_header();<br>    aau_payload();<br>    **ByteAlignement**<br>} | <br><br><br><br>0-7 | <br><br><br><br>**uimsbf** |

**Table 2 - Syntax of avatar_animation_unit()**

The syntax structure of the AAU header is as detailed in the following table:

**Table 3 - Syntax of aau_header()**

| Syntax | No. of bits | Mnemonic |
|---|---|---|
| aau_header() | | |
| { | | |
|     **aau_unit_type;** | 7 | **uimsbf** |
|     **aau_unit_length;** | 32 | **uimsbf** |
|     **aau_keyframe;** | 1 | **boolean** |
|     if (aau_keyframe) | | |
|         aau_quantization | 16 | **uimsbf** |
|         reserved | 1 | **uimsbf** |
| } | | |

The aau_header() syntax construct contains the following syntax elements:

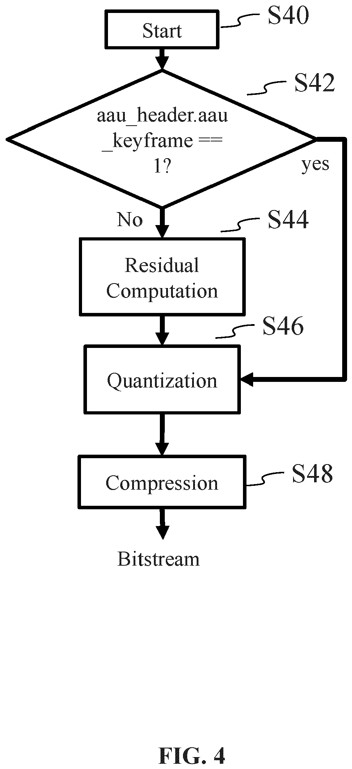

• aau_unit_type: indicates the type of the AAU. The possible values are described in the following table 4.
• aau_unit_length: indicates the size of the AAU payload in bytes.
• aau_keyframe: indicates whether the AAU payload is a keyframe.
• aau_quantization: defines a quantization scale for the carried data. The quantization processing model (a.k.a. encoding method) is described with reference to FIG. 4.

**Table 4 - Avatar Animation Unit type codes and corresponding payloads**

| auh_unit_type | Name of AAU type | Content of AAU payload |
|---|---|---|
| 0 | AAU_TARGET | aau_config_target() |

(continued)

| auh_unit_type | Name of AAU type | Content of AAU payload |
|---|---|---|
| 1 | AAU_CONFIG | aau_config_unit() |
| 2 | AAU_CONTROL | aau_control_unit() |
| 3 | AAU_MORPH | aau_morph_unit() |
| 4 | AAU_JOINT | aau_joint_unit() |
| 5 | AAU_KEYPOINT | aau_keypoint_unit() |
| 6 | AAU_KEYPOINT2D | aau_keypoint2d_unit() |
| 7 | AAU_LANDMARK | aau_landmark_unit() |
| 8..10 | AAU_RSV_7<br>AAU_RSV_10 | Reserved AAU types. |
| 11..31 | AAU_UNSPEC_11<br>AAU_UNSPEC_31 | Unspecified AAU types. |

The aau_payload() is defined as shown in the following table 5. As can be seen from the definition, depending on the value of auh_type in the aau_header() syntex construct, the payload content will be different.

**Table 5 - Syntax of aau_payload()**

| Syntax | No. of bits | Mnemonic |
|---|---|---|
| aau_payload()<br>    aau_timestamp;<br>  if (auh_type == AAU_TARGET)<br>    aau_target_unit()<br>  else if (auh_type == AAU_CONFIG)<br>    aau_config_unit()<br>  else if (auh_type == AAU_CONTROL)<br>    aau_control_unit()<br>  else if (auh_type == AAU_MORPH)<br>    aau_morph_unit()<br>  else if (auh_type == AAU_JOINT)<br>    aau_control_unit()<br>  else if (auh_type == AAU KEYPOINT)<br>    aau_joint_unit()<br>  else if (auh_type == AAU JCEYPOINT2D)<br>    aau_control_unit()<br>  else if (aau_unit_type == AAU_LANDMARK)<br>    aau_landmark_unit() }<br>} | 32 | uimsbf |

The aau_payload() syntax construct contains the following syntax elements:

- aau_timestamp: is the timestamp of the AAU in ticks. The timestamp in seconds can be calculated as timestamp/timescale, where timescale is signalled in the configuration AAU.
- ByteAlignment: is a padding with up to seven bits set to 0 for the AAU payload to be byte-aligned.

A target avatar configuration AAU is an AAU whose auh_type field is set to AAU_TARGET. The payload of such AAU is defined as shown in Table 6.

| Syntax | No. of bits | Mnemonic |
|---|---|---|
| aau_target_unit()<br>{<br>    acu_avatar_id;<br>    acu_lod_id;<br>    acu_skeleton_id;<br>    acu_controller_set_id;<br>    acu_keypoint_set_id;<br>} | <br><br>3<br>3<br>3<br>3<br>3 | <br><br>uimsbf<br>uimsbf<br>uimsbf<br>uimsbf<br>uimsbf |

**Table 6 - Syntax of aau_target_unit()**

The aau_config_unit() syntax construct contains the following syntax elements:

- acu_avatar_id: is an integer identifying the avatar to animate. In some embodiments, this field may not be present. In some embodiments, this field may be replaced by two fields encoding a string, the first one being the length of the string and the second one the characters of the string.
- acu_lod_id: is an integer identifying the Level Of Detail (LOD) of the avatar to animate.

In some embodiments, this field may not be present.

- acu_skeleton_id: is an integer identifying the skeleton of the avatar to animate. In some embodiments, this field may be named "acu_jointset_index". In some embodiments, this field may not be present.
- acu_controller_set_id: is an integer identifying the controller set of the avatar to animate.

In some embodiments, this field may not be present.

- acu_keypoint_set_id: is an integer identifying the keypoint set of the avatar to animate. In some embodiments, this field may not be present.

In another embodiment, the target avatar information may alternatively be signalled as part of the information in a configuration AAU similar to the one defined in the following subsection.

A configuration AAU is an AAU whose auh_type field is set to AAU_CONFIG. The payload of such AAU is defined as shown in Table 7.

| Syntax | No. of bits | Mnemonic |
|---|---|---|
| aau_config_unit()<br>{<br>    acu_profile_length; | <br><br>8 | <br><br>uimsbf |

| | | |
|---|---|---|
| acu_animation_profile; | acu_profile_length * 8 | vlc8 |
| acu_timescale; | 32 | uimsbf |
| acu_control_precision_minus1; | 3 | uimsbf |
| acu_controller_correpondence_flag; | 1 | boolean |
| if (acu_controller_correspondence_flag) { | | |
|    acu_controllerset_id; | 3 | uimsbf |
|    acu_controller_count; | 10 | uimsbf |
|    for (i=0; i<acu_controller_count; i++) { | | |
|       acu_target_controller_index[i]; | 10 | uimsbf |
|    } | | |
| } | | |
| acu_morph_target_correspondence_flag; | 1 | boolean |
| if (acu_morph_target_correspondence_flag) { | | |
|    acu_morphset_id; | 3 | uimsbf |
|    acu_morph_target_count; | 10 | uimsbf |
|    for (i=0; i<acu_morph_target_count; i++) { | | |
|       acu_target_morph_target_index[i]; | 10 | uimsbf |
|    } | | |
| } | | |
| acu_joint_correpondence_flag; | 1 | boolean |
| if (acu_joint_correspondence_flag) { | | |
|    acu_jointset_id; | 3 | uimsbf |
|    acu_joint_count; | 10 | uimsbf |
|    for (i=0; i<acu_joint_count; i++) { | | |
|       acu_target_joint_index[i]; | 10 | uimsbf |
|    } | | |
| } | | |
| acu_keypoint_correpondence_flag; | 1 | boolean |
| if (acu_keypoint_correspondence_flag) { | | |
|    acu_keypointset_id; | 3 | uimsbf |
|    acu_keypoint_count; | 10 | uimsbf |
|    for (i=0; i<acu_keypoint_count; i++) { | | |
|       acu_target_keypoint_index[i]; | 10 | uimsbf |
|    } | | |
| } | | |
| acu_keypoint2d_correpondence_flag; | 1 | boolean |
| if (acu_keypoint2d_correspondence_flag) { | | |
|    acu_keypoint2dset_id; | 3 | uimsbf |
|    acu_keypoint2d_count; | 16 | uimsbf |
|    for (i=0; i<acu_keypoint2d_count; i++) { | | |
|       acu_target_keypoint2d_index[i]; | 16 | uimsbf |
|    } | | |
| } | | |
| acu_landmark_correpondence_flag; | 1 | boolean |
| if (acu_landmark_correspondence_flag) { | | |
|    acu_landmarkset_id; | 3 | uimsbf |
|    acu_landmark_count; | 10 | uimsbf |
|    for (i=0; i<acu_landmark_count; i++) { | | |
|       acu_target_landmark_index[i]; | 10 | uimsbf |
|    } | | |
| } | | |

| | | |
|---|---|---|
| acu_reserved_correspondence_flags; | 4 | booleans |
| acu_reserved_unspecified_flags; | 22 | booleans |
| } | | |

**Table 7 - Syntax of aau_config_unit()**

The aau_config_unit() syntax construct contains the following syntax elements:

- acu_profile_length: is the number of characters in the profile string signalled by acu_animation_profile.
- acu _animation_profile: is a character string with the name of the profile that generated stream conforms to.
- acu_timescale: is the number of ticks per second.
- acu_control_precision_minus1 : plus 1 specifies the size in bytes of the target avatar index in control AAUs. The value of this field shall be greater than 0 and smaller than or equal to 3.
- acu_controller_correspondence_flag: is a flag indicating whether controller correspondence information is signalled in this configuration AAU. Value 0 indicates that no correspondence information is present. Value 1 indicates that controller correspondence information is present in the configuration AAU.
- acu_controller_joint_index[i]: is the index of the target controller corresponding to the source avatar's i-th controller.
- acu_morph target_correspondence_flag: is a flag indicating whether morph target correspondence information is signalled in this configuration AAU. Value 0 indicates that no correspondence information is present. Value 1 indicates that morph target correspondence information is present in the configuration AAU.
- acu_target_morph target_index[i]: is the index of the target morph target corresponding to the source avatar's i-th morph target.
- acu_joint_correspondence_flag: is a flag indicating whether joint correspondence information is signalled in this configuration AAU. Value 0 indicates that no correspondence information is present. Value 1 indicates that joint correspondence information is present in the configuration AAU.
- acu_target_joint_index[i]: is the index of the target avatar skeleton joint corresponding to the source avatar's i-th joint.
- acu_keypoint_correspondence_flag: is a flag indicating whether keypoint correspondence information is signalled in this configuration AAU. Value 0 indicates that no correspondence information is present. Value 1 indicates that keypoint correspondence information is present in the configuration AAU.
- acu_target_keypoint_index[i]: is the index of the target keypoint corresponding to the source avatar's i-th keypoint.acu keypoint_correspondence_flag: is a flag indicating whether keypoint correspondence information is signalled in this configuration AAU. Value 0 indicates that no correspondence information is present. Value 1 indicates that keypoint correspondence information is present in the configuration AAU.
- acu_target_keypoint_index[i]: is the index of the target keypoint corresponding to the source avatar's i-th keypoint.
- acu_keypoint2d_correspondence_flag: is a flag indicating whether 2D keypoint correspondence information is signalled in this configuration AAU. Value 0 indicates that no correspondence information is present. Value 1 indicates that 2D keypoint correspondence information is present in the configuration AAU.
- acu_target_keypoint2d_index[i]: is the index of the target 2D keypoint corresponding to the source avatar's i-th 2D keypoint.
- acu_landmarks_correspondence_flag: is a flag indicating whether landmark correspondence information is signalled in this configuration AAU. Value 0 indicates that no correspondence information is present. Value 1 indicates that landmarks correspondence information is present in the configuration AAU.
- acu_landmarkset_id: is an integer identifying which collection of landmarks is used from the avatar.
- acu_target_landmark_index[i]: is the index of the target avatar skeleton joint corresponding to the source avatar's i-th joint.
- acu _keypoint2dset _id: is an integer identifying which collection of 2D keypoints is used from the avatar.
- acu_keypointset_id: is an integer identifying which collection of keypoints is used from the avatar.
- acu_jointset_id: is an integer identifying which collection of joints is used from the avatar.
- acu_morphset _id: is an integer identifying which collection of morphtargets is used from the avatar.
- acu_controllerset_id: is an integer identifying which collection of animation controllers is used from the avatar.
- acu_reserved_correspondence_flags: are reserved flags for the correspondences of future avatar components.
- acu_reserved_unspecified_flags: are flags for unspecified features.

In another embodiment, the configuration AAU may explicitly signal the index of the source component (controller, morph target, joint, keypoint or keypoint 2D) in addition to the index of the target component (same). The corresponding syntax for this is shown inTable 8, where the syntax element acu_source_<component>_index[i] indicates the i-th index of a source component signalled in the control AAU and acu_target_<component>_index[i] indicates the corresponding remove avatar component index.

| Syntax | No. of bits | Mnemonic |
|---|---|---|
| aau_config_unit()<br>{<br>    acu_profile_length;<br>    acu_animation_profile;<br>    acu_timescale;<br>    acu_control_precision;<br>    acu_controller_correpondence_flag;<br>    if (acu_controller_correspondence_flag) {<br>        acu_controller_count;<br>        for (i=0; i<acu_controller_count; i++) {<br>            acu_source_controller_index[i];<br>            acu_target_controller_index[i];<br>        }<br>    }<br>    acu_morph_target_correspondence_flag;<br>    if (acu_morph_target_correspondence_flag) {<br>        acu_morph_target_count;<br>        for (i=0; i<acu_morph_target_count; i++) {<br>            acu_source_morph_target_index[i];<br>            acu_target_morph_target_index[i];<br>        }<br>    }<br>    acu_joint_correpondence_flag;<br>    if (acu_joint_correspondence_flag) {<br>        acu_joint_count;<br>        for (i=0; i<acu_joint_count; i++) {<br>            acu_source_joint_index[i];<br>            acu_target_joint_index[i];<br>        }<br>    }<br>    acu_keypoint_correpondence_flag;<br>    if (acu_keypoint_correspondence_flag) {<br>        acu_keypoint_count;<br>        for (i=0; i<acu_keypoint_count; i++) {<br>            acu_source_keypoint_index[i];<br>            acu_target_keypoint_index[i];<br>        }<br>    }<br>} | <br><br>8<br>acu_profile_length * 8<br>32<br><br>1<br><br>10<br><br>10<br>10<br><br><br><br>1<br><br>10<br><br>10<br>10<br><br><br><br>1<br><br>10<br><br>10<br>10<br><br><br><br>1<br><br>10<br><br>10<br>10 | <br><br>uimsbf<br>vlc8<br>uimsbf<br><br>boolean<br><br>uimsbf<br><br>uimsbf<br>uimsbf<br><br><br><br>boolean<br><br>uimsbf<br><br>uimsbf<br>uimsbf<br><br><br><br>boolean<br><br>uimsbf<br><br>uimsbf<br>uimsbf<br><br><br><br>boolean<br><br>uimsbf<br><br>uimsbf<br>uimsbf |

| Syntax | No. of bits | Mnemonic |
|---|---|---|
| **acu_keypoint2d_correpondence_flag;** | 1 | **boolean** |
| if (acu_keypoint2d_correspondence_flag) { | | |
|   **acu_keypoint2d_count;** | 16 | **uimsbf** |
|   for (i=0; i<acu_keypoint2d_count; i++) { | | |
|     **acu_source_keypoint2d_index[i];** | 16 | **uimsbf** |
|     **acu_target_keypoint2d_index[i];** | 16 | **uimsbf** |
|   } | | |
| } | | |
| **acu_landmark_correpondence_flag;** | 1 | **boolean** |
| if (acu_landmark_correspondence_flag) { | | |
|   **acu_landmarkset_id;** | 3 | **uimsbf** |
|   **acu_landmark_count;** | 10 | **uimsbf** |
|   for (i=0; i<acu_landmark_count; i++) { | | |
|     **acu_source_landmark_index[i];** | 10 | **uimsbf** |
|     **acu_target_landmark_index[i];** | 10 | **uimsbf** |
|   } | | |
| } | | |
| **acu_reserved_correspondence_flags;** | 4 | **booleans** |
| **acu_reserved_unspecified_flags;** | 22 | **booleans** |
| } | | |

**Table 8 - Syntax of aau_config_unit() with explicit signalling of source indices**

In another embodiment, in addition to the information signaled in the previous two embodiments, the configuration AAU may include information on the target avatar instead of having a separate AAU type for that information. An example configuration AAU based on this embodiment is as in Table 9.

| Syntax | No. of bits | Mnemonic |
|---|---|---|
| aau_config_unit() | | |
| { | | |
|   **acu_profile_length;** | 8 | **uimsbf** |
|   **acu_animation_profile;** | **acu_profile_length * 8** | **vlc8** |
|   **acu_timescale;** | 32 | **uimsbf** |
|   **acu_control_precision_minus1;** | 3 | **uimsbf** |
|   **acu_target_avatar_info_flag;** | 1 | **boolean** |
|   if (acu_target_avatar_info_flag) { | | |
|     **acu_avatar_id;** | 3 | **uimsbf** |
|     **acu_lod_id;** | 3 | **uimsbf** |
|     **acu_skeleton_id;** | 3 | **uimsbf** |
|     **acu_controller_set_id;** | 3 | **uimsbf** |
|     **acu_keypoint_set_id;** | 3 | **uimsbf** |
|   } | | |
|   **acu_controller_correpondence_flag;** | 1 | **boolean** |
|   if (acu_controller_correspondence_flag) { | | |
|     **acu_controller_count;** | 10 | **uimsbf** |
|     for (i=0; i<acu_controller_count; i++) { | | |
|       **acu_target_controller_index[i];** | 10 | **uimsbf** |
|     } | | |
|   } | | |

| | | |
|---|---|---|
| **acu_morph_target_correspondence_flag;** | **1** | **boolean** |
| if (acu_morph_target_correspondence_flag) { | | |
|    **acu_morph_target_count;** | **10** | **uimsbf** |
|    for (i=0; i<acu_morph_target_count; i++) { | | |
|       **acu_target_morph_target_index**[i]; | **10** | **uimsbf** |
|       } | | |
|   } | | |
| **acu_joint_correpondence_flag;** | **1** | **boolean** |
| if (acu_joint_correspondence_flag) { | | |
|    **acu_joint_count;** | **10** | **uimsbf** |
|    for (i=0; i<acu_joint_count; i++) { | | |
|       **acu_target_joint_index**[i]; | **10** | **uimsbf** |
|       } | | |
|   } | | |
| **acu_keypoint_correpondence_flag;** | **1** | **boolean** |
| if (acu_keypoint_correspondence_flag) { | | |
|    **acu_keypoint_count;** | **10** | **uimsbf** |
|    for (i=0; i<acu_keypoint_count; i++) { | | |
|       **acu_target_keypoint_index**[i]; | **10** | **uimsbf** |
|       } | | |
|   } | | |
| **acu_keypoint2d_correpondence_flag;** | **1** | **boolean** |
| if (acu_keypoint2d_correspondence_flag) { | | |
|    **acu_keypoint2d_count;** | **16** | **uimsbf** |
|    for (i=0; i<acu_keypoint2d_count; i++) { | | |
|       **acu_target_keypoint2d_index**[i]; | **16** | **uimsbf** |
|       } | | |
|   } | | |
| **acu_landmark_correpondence_flag;** | **1** | **boolean** |
| if (acu_landmark_correspondence_flag) { | | |
|    **acu_landmarkset_id;** | **3** | **uimsbf** |
|    **acu_landmark_count;** | **10** | **uimsbf** |
|    for (i=0; i<acu_landmark_count; i++) { | | |
|       **acu_target_landmark_index**[i]; | **10** | **uimsbf** |
|       } | | |
|   } | | |
| **acu_reserved_correspondence_flags;** | **4** | **booleans** |
| **acu_reserved_unspecified_flags;** | **22** | **booleans** |
| } | | |

**Table 9**

A control AAU is an AAU whose auh_type field is set to AAU_CONTROL. The payload of such AAU is defined as shown in Table 10.

| Syntax | No. of bits | Mnemonic |
|---|---|---|
| aau_control_unit() | | |
| { | | |
|    **atu_controller_count_minus1;** | **10** | **uimsbf** |
|    for (i=1; i<atu_controller_count_minus1 + 1; i++) { | | |

| Syntax | No. of bits | Mnemonic |
|---|---|---|
| atu_controller_index[i];<br>atu_control_weight[i];<br>    }<br>}<br>} | acu_control_precision*8<br>32 | uimsbf<br>float |

**Table 10 - Syntax of aau_control_unit()**

The aau_control_unit() syntax construct contains the following syntax elements:

- atu_controller_count_minus1: plus 1 indicates the number of controller weights present in the control AAU.

- atu_controller_index[i]: is the index of the i-th source controller whose weight is signalled in the control AAU.

- atu_control_weight[i]: is the weight to be applied for the target controller corresponding to the i-th source controller in the control AAU.

A morph target AAU is an AAU whose auh_type field is set to AAU_MORPH. The payload of such AAU as shown in Table 11.

| Syntax | No. of bits | Mnemonic |
|---|---|---|
| aau_morph_unit()<br>{<br>    amu_morph_target_count_minus1;<br>    for (i=1; i<amu_morph_target_count_minus1 + 1; i++) {<br>        amu_morph_target_index[i];<br>        amu_morph_target_weight[i];<br>    }<br>} | 10<br><br><br>acu_morph_precision*8<br>32 | uimsbf<br><br><br>uimsbf<br>float |

**Table 11 - Syntax of aau_morph_unit()**

The aau_morph_unit() syntax construct contains the following syntax elements:

- amu_morph_target_count_minus1: plus 1 indicates the number of morph targets whose weights are signalled in this morph target AAU.
- amu_morph_target_index[i] is the index of the i-th morph target whose weight is signalled in the control AAU.
- amu_morph_target_weight[i] is the weight of the i-th morph target whose weight is signalled in the control AAU.

A joint transform AAU is an AAU whose auh_type field is set to AAU_JOINT. The payload of such AAU is defined as shown in Table 12.

| Syntax | No. of bits | Mnemonic |
|---|---|---|
| aau_joint_unit()<br>{<br>    aju_joint_count_minus1;<br>    for (i=1; i<aju_joint_count_minus1 + 1; i++) {<br>        aju_source_joint_index[i];<br>        aju_target_joint_index[i];<br>        aju_joint_transform[i];<br>    }<br>} | <br><br>10<br><br>10<br>10<br>16 * 32 | <br><br>uimsbf<br><br>uimsbf<br>uimsbf<br>float |

**Table 12 - Syntax of aau_joint_unit()**

The aaujoint_unit() syntax construct contains the following syntax elements:

- aju_joint_count_minus1: plus 1 indicate the number of joint transformations signalled in the joint transform AAU.
- aju_sourcejoint_index[i]: indicates the source joint index for the i-th joint signalled in the joint transform AAU.
- aju_target_joint_index[i]: indicates the target joint index for the i-th joint signalled in the joint transform AAU.
- aju_joint_transform[i]: is the transformation matrix for the target joint corresponding to the source joint whose index is signalled by the field aju_source_joint_index[i].

In some embodiments, the ajujoint_transform[i] field may be replaced by an encoding of optional translation, rotation and scale, as presented in Table 13.

| Syntax | No. of bits | Mnemonic |
|---|---|---|
| aau_joint_unit() | | |
| { | | |
|     **aju_joint_count_minus1**; | **10** | **uimsbf** |
|     for (i=1; i<aju_joint_count_minus1 + 1; i++) { | | |
|         **aju_source_joint_index**[i]; | **10** | **uimsbf** |
|         **aju_target_joint_index**[i]; | **10** | **uimsbf** |
|         **aju_joint_translation_flag**[i]; | **1** | **boolean** |
|         if (aju_joint_translation_flag[i]) { | | |
|             **aju_joint_translation**[i]; | **3 * 32** | **float** |
|         } | | |
|         **aju_joint_rotation_flag**[i]; | **1** | **boolean** |
|         if (aju_joint_rotation_flag[i]) { | | |
|             **aju_joint_quaternion_flag**[i]; | **1** | **boolean** |
|           if (aju_joint_quaternion_flag[i]) { | | |
|             **aju_joint_quaternion**[i]; | **4 * 32** | **float32** |
|           }else { | **4 * 32** | **float32** |
|             **aju_joint_rotation**[i]; | **4 * 32** | **float32** |
|           } | | |
|         } | | |
|         **aju_joint_scale_flag**[i]; | **1** | **boolean** |
|         if (aju_joint_scale_flag[i]) { | | |
|             **aju_joint_scale**[i]; | **3 * 32** | **float** |
|         } | | |
|     } | | |
| } | | |

**Table 13 - Syntax of aau_joint_unit() with translation, rotation, and scale**

- aju_joint_translation_flag[i]: is a flag indicating whether a translation is signalled for the i-th joint.
- aju_joint_translation[i]: is the translation for the target joint corresponding to the source joint whose index is signalled by the field aju_source_joint_index[i].
- aju_joint_rotation_flag[i]: is a flag indicating whether a rotation is signalled for the i-th joint.
- aju_joint_rotation [i]: is the rotation for the target joint corresponding to the source joint whose index is signalled by the field aju_source_joint_index[i].
- ajujoint_quatemion_flag[i]: is a flag indicating whether a quaternion type of rotation is signalled for the i-th j oint.
- aju_joint_quaternion [i]: is the quaternion type of rotation for the target j oint corresponding to the source joint whose index is signalled by the field aju_source_joint_index[i].
- aju_joint_scale_flag[i]: is a flag indicating whether a scale is signalled for the i-th joint.
- aju_joint_scale[i]: is the scale for the target joint corresponding to the source joint whose index is signalled by the field aju_source_joint_index[i].

A keypoint AAU is an AAU whose auh_type field is set to AAU_KEYPOINT. The payload of such AAU is defined as shown in Table 14.

| Syntax | No. of bits | Mnemonic |
|---|---|---|
| aau_keypoint_unit()<br>{<br>    **aku_keypoint_count_minus1**;<br>    for (i=1; i<aku_keypoint_count_minus1 + 1; i++) {<br>      **aku_source_keypoint_index**[i];<br>      **aku_keypoint_transform**[i];<br>    }<br>} | <br><br>16<br><br>16<br>16 * 32 | <br><br>uimsbf<br><br>uimsbf<br>float |

**Table 14 - Syntax of aau_keypoint_unit()**

The aau_keypoint_unit() syntax construct contains the following syntax elements:

- aku_keypoint_count_minus1: plus 1 indicates the number of keypoint transformations signalled in the kypoint transform AAU.
- aku_source_keypoint_index[i]: indicates the source keypoint index for the i-th keypoint signalled in the keypoint transform AAU.
- aku_keypoint_transform[i]: is the transformation matrix for the target keypoint corresponding to the source keypoint whose index is signalled by the field aku_source_keypoint_index[i].

In some embodiments, the aku_keypoint_transform[i] field may be replaced by an encoding of optional translation, rotation, and scale, as presented in Table 15.

| Syntax | No. of bits | Mnemonic |
|---|---|---|
| aau_keypoint_unit()<br>{<br>    **aku_keypoint_count_minus1**;<br>    for (i=1; i<aku_joint_count_minus1 + 1; i++) {<br>      **aku_source_keypoint _index**[i];<br>      **aku_keypoint_translation_flag**[i];<br>      if (aku_keypoint_translation_flag[i]) {<br>        **aku_keypoint_translation**[i];<br>      }<br>      **aku_keypoint_rotation_flag**[i];<br>      if (aku_keypoint_rotation_flag[i]) {<br>        **aku_keypoint_rotation**[i];<br>      }<br>      **aku_keypoint_scale_flag**[i];<br>      if (aku_keypoint_scale_flag[i]) {<br>        **aku_keypoint_scale**[i];<br>      }<br>    }<br>} | <br><br>10<br><br>10<br>1<br><br>3 * 32<br><br>1<br><br>4 * 32<br><br>1<br><br>3 * 32 | <br><br>uimsbf<br><br>uimsbf<br>boolean<br><br>float<br><br>boolean<br><br>float<br><br>boolean<br><br>float |

**Table 15 - Syntax of aau_keypoint_unit() with translation, rotation and scale**

- aku_keypoint_translation_flag[i]: is a flag indicating whether a translation is signalled for the i-th keypoint.
- aku_keypoint_translation[i]: is the translation for the target keypoint corresponding to the source keypoint whose index is signalled by the field aku_source_keypoint_index[i].
- aku _keypoint_rotation _flag[i]: is a flag indicating whether a rotation is signalled for the i-th keypoint.

- aku _keypoint_ rotation [i]: is the rotation for the target keypoint corresponding to the source keypoint whose index is signalled by the field aku_source_keypoint_index[i].
- aku_keypoint_scale_flag[i]: is a flag indicating whether a scale is signalled for the i-th keypoint.
- aku_keypoint_scale[i]: is the scale for the target keypoint corresponding to the source keypoint whose index is signalled by the field aku_source_keypoint_index[i].

A 2D keypoint AAU is an AAU whose auh_type field is set to AAU_KEYPOINT2D. The payload of such AAU is defined as shown in Table 16.

| Syntax | No. of bits | Mnemonic |
|---|---|---|
| aau_keypoint2d_unit() { ak2u_keypoint2d_count_minus1; for (i=1; i<ak2u_keypoint2d_count_minus1 + 1; i++) { ak2u_source_keypoint2d_index[i]; ak2u_keypoint2d_transform[i]; } } | 16<br>16<br>9 * 32 | uimsbf<br>uimsbf<br>float |

**Table 16 - Syntax of aau_keypoint2d_unit()**

The aau_keypoint2d_unit() syntax construct contains the following syntax elements:

- ak2u_keypoint2d_count_minus1: plus 1 indicate the number of 2D keypoint transformations signalled in the joint transform AAU.
- ak2u_source_keypoint2d_index[i]: indicates the source 2D keypoint index for the i-th 2D keypoint signalled in the 2D keypoint transform AAU.
- ak2u_keypoint2d_transform[i]: is the transformation matrix for the target 2D keypoint corresponding to the source 2D keypoint whose index is signalled by the field ak2u_source_keypoint2d_index[i].

In some embodiments, the ak2u_keypoint2d_transform[i] field may be replaced by an encoding of optional translation, rotation, and scale, as presented in Table 17.

| Syntax | No. of bits | Mnemonic |
|---|---|---|
| aau_keypoint2d_unit() { ak2u_keypoint2d_count_minus1; for (i=1; i<ak2u_joint2d_count_minus1 + 1; i++) { ak2u_source_keypoint2d _index[i]; ak2u_keypoint2d_translation_flag[i]; if (ak2u_keypoint2d_translation_flag[i]) { ak2u_keypoint2d_translation[i]; } ak2u_keypoint2d_rotation_flag[i]; if (ak2u_keypoint2d_rotation_flag[i]) { ak2u_keypoint2d_rotation[i]; | 16<br>16<br>1<br><br>2 * 32<br><br>1<br><br>3 * 32 | uimsbf<br>uimsbf<br>boolean<br><br>float<br><br>boolean<br><br>float |

| Syntax | No. of bits | Mnemonic |
|---|---|---|
| } | | |
| **ak2u_keypoint2d_scale_flag**[i]; | **1** | **boolean** |
| if (ak2u_keypoint2d_scale_flag[i]) { | | |
| **ak2u_keypoint2d_scale**[i]; | **2 * 32** | **float** |
| } | | |
| } | | |
| } | | |

**Table 17 - Syntax of aau_keypoint2d_unit() with translation, rotation and scale**

- ak2u_keypoint2d_translation_flag[i]: is a flag indicating whether a translation is signalled for the i-th 2D keypoint.
- ak2u_keypoint2d_translation[i]: is the translation for the target 2D keypoint corresponding to the source 2D keypoint whose index is signalled by the field ak2u_source_keypoint2d_index[i].
- ak2u_keypoint2d_rotation_flag[i]: is a flag indicating whether a 2D rotation is signalled for the i-th 2D keypoint.
- ak2u_keypoint2d_rotation [i]: is the rotation for the target 2D keypoint corresponding to the source 2D keypoint whose index is signalled by the field ak2u_source_keypoint2d_index[i].
- ak2u_keypoint2d_scale_flag[i]: is a flag indicating whether a scale is signalled for the i-th 2D keypoint.
- ak2u_keypoint2d_scale[i]: is the scale for the target 2D keypoint corresponding to the source 2D keypoint whose index is signalled by the field ak2u_source_keypoint2d_index[i].

A landmark AAU is an AAU whose aau_unit_type field is set to AAU_LANDMARK. The payload of such AAU is defined as shown in Table 18.

| Syntax | No. of bits | Mnemonic |
|---|---|---|
| aau_landmark_unit() | | |
| { | | |
| **alu_landmark_count_minus1**; | **10** | **uimsbf** |
| for (i=1; i<alu_landmark_count_minus1 + 1; i++) { | | |
| **alu_source_landmark_index**[i]; | **10** | **uimsbf** |
| **alu_target_landmark_index**[i]; | **10** | **uimsbf** |
| **alu_landmark_transform**[i]; | **16 * 32** | **float32** |
| } | | |
| } | | |

**Table 18 - Syntax of aau_landmark_unit() with translation, rotation, and scale**

The aau_landmark_unit() syntax construct contains the following syntax elements:

- alu_landmark_count_minus1: plus 1 indicate the number of landmark transformations signalled in the landmark animation AAU.
- alu_source_landmark_index[i]: indicates the source landmark index for the i-th landmark signalled in the landmark animation AAU.
- alu_target_landmark_index[i]: indicates the target landmark index for the i-th landmark signalled in the landmark animation AAU.
- alu_landmark_transform[i]: is the transformation matrix for the target landmark corresponding to the source landmark whose index is signalled by the field aju_source_ landmark _index[i].

Alternatively, the alu_landmark_transform[i] field may be replaced by an encoding of optional translation, rotation, scale, velocity, inertia and uncertainty as presented in Table 19.

| Syntax | No. of bits | Mnemonic |
|---|---|---|
| aau_landmark_unit()<br>{<br>    **alu_landmark_count_minus1**;<br>    for (i=1; i<alu_landmark_count_minus1 + 1; i++) {<br>        **alu_source_landmark_index**[i];<br>        **alu_target_landmark_index**[i];<br>        **alu_landmark_translation_flag**[i];<br>        if (alu_landmark_translation_flag[i]) {<br>            **alu_landmark_translation**[i];<br>        }<br>        **alu_landmark_position_flag**[i];<br>        if (alu_landmark_position_flag[i]) {<br>            **alu_landmark_position**[i];<br>        }<br>        **alu_landmark_uncertainty_flag**[i];<br>        if (alu_landmark_uncertainty_flag[i]) {<br>            **alu_landmark_uncertainty**[i];<br>        }<br>    }<br>} | <br><br>10<br><br>10<br>10<br>1<br><br>3 * 32<br><br>1<br><br>3 * 32<br><br>1<br><br>32 | <br><br>uimsbf<br><br>uimsbf<br>uimsbf<br>boolean<br><br>float32<br><br>boolean<br><br>float32<br><br>boolean<br><br>float32 |

- alu_landmark_translation _flag[i]: is a flag indicating whether a translation is signalled for the i-th landmark.
- alu_landmark_translation[i]: is the translation for the target landmark corresponding to the source landmark whose index is signalled by the field alu_source_landmark_index[i].
- alu_landmark_position_flag[i]: is a flag indicating whether a position is signalled for the i-th landmark.
- alu_landmark_position [i]: is the absolute position for the target landmark corresponding to the absolute position of the source landmark whose index is signalled by the field alu_source_landmark_index[i].
- alu_uncertainty_flag[i]: is a flag indicating whether an uncertainty is signalled for the i-th landmark.
- alu_landmark_uncertainty [i]: is the uncertainty of the prediction for the animation parameter for the target landmark corresponding to the source landmark whose index is signalled by the field alu_source_landmark _index[i].

FIG. 4 is a block diagram illustrating an example of an encoding method (e.g., a processing model) for the avatar animation unit using quantization and compression. The method uses quantization to code and compress the bitstream format. The quantization flag in one example can be fixed and normative with a defined default value for all the data parameters transmitted in the payload.

In a different embodiment, the quantization flag is transmitted and unique to all data parameters in the payload, which means all data in the payload is quantified to an integer value to the same number of bits e.g., quantization of 10 bits.

In yet another embodiment, the quantization flag is transmitted per keyframe and different for every data parameter transmitted in the payload, making the bitstream size variable depending on the type of data being transmitted in the payload.

FIG. 4 shows the encoding of an aau_header and an aau_payload function (S40). At S42, the header (aau_header) is checked to determine whether the aau is a keyframe aau or a non keyframe aau.

If the aau is not a keyframe, residual values in the aau_payload are computed (S44):

$$data' = data_{prev} - data$$

Where "data" can be represented by any data floating value present in the "aau_payload" with a "aau_type" equals to "AAU ANIMATION", "AAUJOINT" or "AAULANDMARK" e.g., "amu_animation_target_weights[i]" that represent 32 bits of type float32, but not limited to.

The data of the previous frame $data_{prev}$ is subtracted from the current frame $data$, which results in applying quantization to the difference between two frames, wherein the previous frame is a keyframe.

If the aau is a keyframe, values are not modified:

$$data' = data$$

Then, in all cases, values (residual or absolute) are quantized (S46) using aau_quantization defined in the aau header:

$$data_q = round\left(\frac{data'}{1 \ll QS}\right)$$

The QS can be defined by any variable integer value e.g., QS = 5, or QS = 10 or any positive number.

The resulted $data_q$ in one embodiment is used to define a number of bits for the data that needs to be compressed and transmitted.

Finally, a compression mechanism of integers (S48) is used, this can typically be entropy encoding, but not limited too.

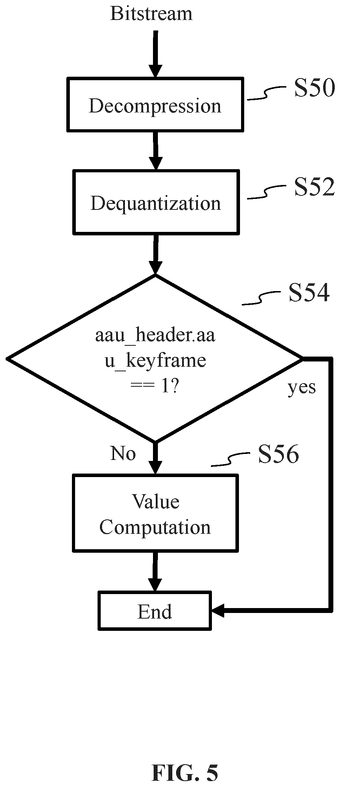

**FIG. 5** is a block diagram illustrating an example of a decoding method (e.g., a processing model) for the avatar animation unit reconstruction.

A decompression mechanism of integers is used (S50), consistent with the one used in the encoding stage (S48), e.g., using entropy decoding. The result is an aau_header and an aau_payload where floating values are quantized.

The floating values are reconstructed/dequantized (S52) using the aau_quantization defined in the aau header:

$$data' = (1 \ll QS)data_q$$

If the aau is not a keyframe, absolute values in the aau_payload are computed (S56):

$$data = data_{prev} - data'$$

If the aau is a keyframe, values are not modified:

$$data = data'$$

An avatar may then be rendered once AAUs are reconstructed.

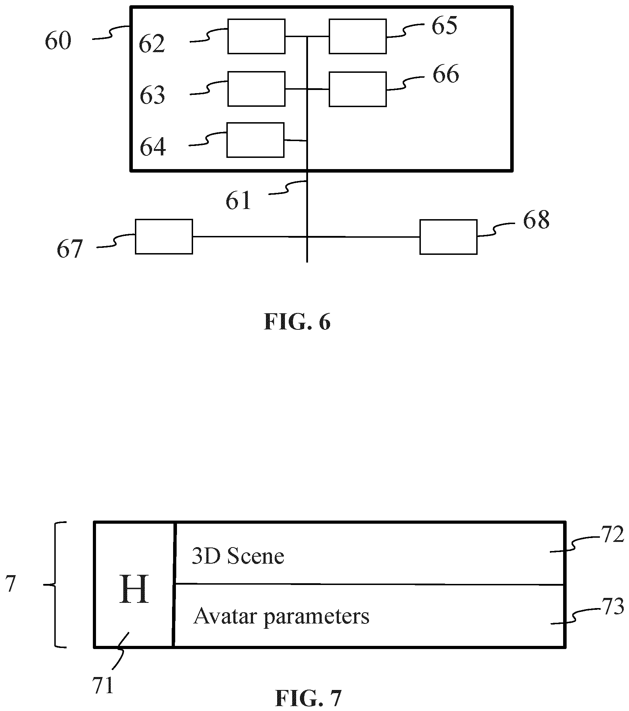

**FIG. 6** shows an example architecture of a device 60 which may be configured to implement methods according to embodiments of the present principles. The device is linked with other devices via their bus 61 and/or via I/O interface 66.

Device 60 comprises following elements that are linked together by a data and address bus 61:

- a processor 62 (or CPU), which is, for example, a DSP (or Digital Signal Processor);
- a ROM (or Read Only Memory) 63;
- a RAM (or Random Access Memory) 64;
- a storage interface 65;
- an I/O interface 66 for reception of data to transmit, from an application; and
- a power supply (not represented), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 63 comprises at least a program and parameters. The ROM 63 may store algorithms and instructions to perform techniques in accordance with present principles. When switched on, the CPU 62 uploads the program in the RAM and executes the corresponding instructions.

The RAM 64 comprises, in a register, the program executed by the CPU 62 and uploaded after switch-on of the device 60, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 60 is linked, for example via bus 61 to a set of sensors 67 and to a set of rendering devices 68. Sensors 67 may be, for example, cameras, microphones, temperature sensors, Inertial Measurement Units, GPS, hygrometry sensors, IR or UV light sensors or wind sensors. Rendering devices 68 may be, for example, displays, speakers, vibrators, heat, fan, etc.

In accordance with examples, the device 60 is configured to implement a method according to the present principles of managing a representation of the real environment of a user of an XR application, and belongs to a set comprising:

- a mobile device;
- a communication device;
- a game device;
- a tablet (or tablet computer);
- a laptop;
- a still picture camera;
- a video camera.

**FIG. 7** shows an example of an embodiment of the syntax of a stream when the data are transmitted over a packet-based transmission protocol. FIG. 7 shows an example structure 7 of a stream encoding point clouds according to the present principle. The structure consists in a container which organizes the stream in independent elements of syntax. The structure may comprise a header part 71 which is a set of data common to every syntax element of the stream. For example, the header part comprises some of metadata about syntax elements, describing the nature and the role of each of them. The structure comprises a payload comprising an element of syntax 72 and at least one element of syntax 73 (there may be an element of syntax 7 for each type of attribute data, for instance one for the color, one for the reflectance, one for the normal vectors, etc.). Syntax element 72 comprises data representative of the geometry of the point cloud, that is, for example, a series of bits representative of the 3D blocks, for example represented as a trisoup.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method comprising:

   obtaining an avatar animation unit (AAU) comprising a header and a payload;
   determining from the header whether the AAU is a keyframe AAU or a non-keyframe AAU; and encoding the AAU responsive to the determining.

2. The method of claim 1, wherein encoding the AAU responsive to the determining comprises quantizing data of the payload and encoding the quantized data in a bitstream responsive to the AAU being a keyframe AAU.

3. The method of claim 1 or 2, wherein encoding the AAU responsive to determining comprises computing residual data by subtracting data of a previous keyframe payload from data of current payload, quantizing the residual data and encoding the quantized data in a bitstream responsive to the AAU being a non-keyframe AAU.

4. The method of any one of claims 1 to 3, wherein quantizing uses a quantization scale and wherein the method further comprises encoding the quantization scale in the header responsive to the AAU being a keyframe AAU.

5. The method of any one of claims 1 to 4, wherein determining from the header whether AAU is a keyframe AAU or a non-keyframe AAU comprises determining that the AAU is a keyframe AAU in a case where a binary syntax element of the header is equal to one and a non-keyframe otherwise.

6. A method comprising :

   decoding a header and a payload of an avatar animation unit (AAU);
   determining from the header whether the AAU is a keyframe AAU or a non-keyframe AAU; and reconstructing the AAU responsive to the determining.

7. The method of claim 6, wherein reconstructing the AAU responsive to the determining comprises dequantizing data of the payload to obtain a reconstructed AAU payload responsive to the AAU being a keyframe AAU.

8. The method of claim 6 or 7, wherein reconstructing the AAU responsive to the determining comprises dequantizing residual data and reconstructing a AAU payload by adding data of a previous keyframe payload to dequantized residual data responsive to the AAU being a non-keyframe AAU.

9. The method of any one of claims 6 to 8, wherein dequantizing uses a quantization scale and wherein the method further comprises decoding the quantization scale from the header responsive to the AAU being a keyframe AAU.

10. The method of any one of claims 6 to 9, wherein determining from the header whether AAU is a keyframe AAU or a non-keyframe AAU comprises determining that the AAU is a keyframe AAU in a case where a binary syntax element of the header is equal to one and a non-keyframe otherwise.

11. An encoding apparatus comprising one or more processors and at least one memory coupled to said one or more processors, wherein said one or more processors are configured to perform:

   obtaining an avatar animation unit (AAU) comprising a header and a payload;
   determining from the header whether the AAU is a keyframe AAU or a non-keyframe AAU; and encoding the AAU responsive to the determining.

12. A decoding apparatus comprising one or more processors and at least one memory coupled to said one or more processors, wherein said one or more processors are configured to perform:

   decoding a header and a payload of an avatar animation unit (AAU);
   determining from the header whether the AAU is a keyframe AAU or a non-keyframe AAU; and reconstructing the AAU responsive to the determining.

13. A computer program comprising program code instructions for implementing the method according to any one of claims 1-10 when executed by a processor.

14. A computer readable storage medium having stored thereon instructions for implementing the method of any one of claims 1-10.

15. A signal comprising a bitstream, formed by performing the method of any one of claims 1 to 5.

FIG. 1

20

| obtaining parameters of
a source and of a target avatar | ⌒ 21 |

↓

| mapping parameters
Source → target | ⌒ 22 |

↓

| encoding parameters | ⌒ 23 |

**FIG. 2**

30

| decoding parameters of
a source and mapped parameters | ⌒ 31 |

↓

| mapping parameters
Source → target | ⌒ 32 |

↓

| generating target avatar mesh | ⌒ 33 |

**FIG. 3**

Start — S40

aau_header.aau
_keyframe ==
1? — S42

yes

No

Residual
Computation — S44

Quantization — S46

Compression — S48

Bitstream

**FIG. 4**

Bitstream

```
          │
          ▼
┌──────────────────┐
│  Decompression   │ ──⌇ S50
└──────────────────┘
          │
          ▼
┌──────────────────┐
│  Dequantization  │ ──⌇ S52
└──────────────────┘
          │
          ▼
        ◇◇◇◇                ──⌇ S54
    aau_header.aa
     u_keyframe              yes
       == 1?       ───────────┐
        ◇◇◇◇                  │
     No   │                   │
         ▼        ──⌇ S56     │
┌──────────────────┐          │
│      Value       │          │
│   Computation    │          │
└──────────────────┘          │
          │                   │
          ▼                   │
┌──────────────────┐          │
│       End        │◄─────────┘
└──────────────────┘
```

**FIG. 5**

60 — 62 — 65

63 — 66

64

61

67 — 68

**FIG. 6**

7 — H | 3D Scene — 72
Avatar parameters — 73

71

**FIG. 7**

Europäisches
Patentamt

European
Patent Office

Office européen
des brevets

# EUROPEAN SEARCH REPORT

**Application Number**

EP 25 30 5040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 5 818 463 A (TAO HAI [US] ET AL)<br>6 October 1998 (1998-10-06)<br>* column 1, line 61 - column 3, line 12;<br>figure 2 *<br>* column 3, line 29 - column 4, line 66;<br>figures 2,3 *<br>----- | 1-3,6-8,<br>11-15<br>4,5,9,10 | INV.<br>H04N19/124<br>G06T9/00<br>G06T13/20<br>H04N19/17<br>H04N19/172<br>H04N19/20 |
| Y | US 2024/394924 A1 (TIAN JUN [US] ET AL)<br>28 November 2024 (2024-11-28)<br>* paragraph [0173]; figures 10,20 *<br>----- | 4,5,9,10 | H04N19/70<br>H04N21/81<br>H04N21/854 |
| A | "White paper on MPEG-I Scene Description",<br>140. MPEG MEETING; 20221024 - 20221028;<br>MAINZ; (MOTION PICTURE EXPERT GROUP OR<br>ISO/IEC JTC1/SC29/WG11),<br>,<br>no. n22138<br>6 November 2022 (2022-11-06), XP030305014,<br>Retrieved from the Internet:<br>URL:https://dms.mpeg.expert/doc_end_user/d<br>ocuments/140_Mainz/wg11/MDS22138_AG03_N000<br>91.zip AG3w91SN22138White Paper on MPEG-I<br>Scene Description.pdf<br>[retrieved on 2022-11-06]<br>* the whole document *<br>----- | 1-15 | |

TECHNICAL FIELDS
SEARCHED (IPC)

H04N
G06T

-/--

The present search report has been drawn up for all claims

| Place of search | Date of completion of the search | Examiner |
|---|---|---|
| Munich | 6 June 2025 | McGrath, Simon |

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br><br>EP 25 30 5040 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | "Text of ISO/IEC FDIS 23090-14 2nd edition Scene description",<br>146. MPEG MEETING; 20240422 - 20240426; RENNES; (MOTION PICTURE EXPERT GROUP OR ISO/IEC JTC1/SC29/WG11),<br>,<br>no. n23831<br>9 July 2024 (2024-07-09), XP030330017,<br>Retrieved from the Internet:<br>URL:https://dms.mpeg.expert/doc_end_user/documents/146_Rennes/wg11/MDS23831_WG03_N01221.zip<br>MDS23831_WG03_N01221_23090-14_2nd_edition_cl.docx<br>[retrieved on 2024-07-09]<br>* paragraphs [3.1.18], [5.1.1],<br>[5.1.1.2], [5.3.2.1], [7.5.3.4],<br>[7.6.3.3] *<br>----- | 1-15 | |
| A | WO 2024/042138 A1 (INTERDIGITAL CE PATENT HOLDINGS SAS [FR])<br>29 February 2024 (2024-02-29)<br>* figures 1,11 *<br>----- | 1-15 | **TECHNICAL FIELDS<br>SEARCHED (IPC)** |
| A | SIDDHARTHA CHATTOPADHYAY ET AL:<br>"Efficient compression and delivery of stored motion data for avatar animation in resource constrained devices",<br>PROCEEDINGS OF THE ACM SYMPOSIUM ON VIRTUAL REALITY SOFTWARE AND TECHNOLOGY , VRST '05, ACM PRESS, MONTEREY, CA, USA (NOVEMBER 7-9, 2005),<br>7 November 2005 (2005-11-07), pages 235-243, XP058203882,<br>DOI: 10.1145/1101616.1101665<br>ISBN: 978-1-59593-098-9<br>* the whole document *<br>----- | 1-15 | |

The present search report has been drawn up for all claims

| Place of search | Date of completion of the search | Examiner |
|---|---|---|
| Munich | 6 June 2025 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 30 5040

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | | Publication date | Patent family member(s) | | Publication date |
|---|---|---|---|---|---|
| US 5818463 | A | 06-10-1998 | CA | 2229245 A1 | 13-08-1998 |
| | | | DE | 69813926 T2 | 19-05-2004 |
| | | | EP | 0859339 A2 | 19-08-1998 |
| | | | JP | H10336680 A | 18-12-1998 |
| | | | US | 5818463 A | 06-10-1998 |
| | | | US | 6069631 A | 30-05-2000 |
| | | | US | 6130679 A | 10-10-2000 |
| | | | US | 6429870 B1 | 06-08-2002 |
| US 2024394924 | A1 | 28-11-2024 | CN | 120019417 A | 16-05-2025 |
| | | | US | 2024394924 A1 | 28-11-2024 |
| | | | WO | 2024243536 A1 | 28-11-2024 |
| WO 2024042138 | A1 | 29-02-2024 | AU | 2023329088 A1 | 20-02-2025 |
| | | | CN | 119744537 A | 01-04-2025 |
| | | | KR | 20250056190 A | 25-04-2025 |
| | | | WO | 2024042138 A1 | 29-02-2024 |

EPO FORM P0459

For more details about this annex : see Official Journal of the European Patent Office, No. 12/82